# EUROPEAN PATENT APPLICATION

(11) **EP 4 641 332 A1**
(43) Date of publication of application: **29.10.2025**
(21) Application number: 24171814.7
(22) Date of filing: 23.04.2024
(51) Int. Cl.: G05B 23/02, G05B 13/02, G05B 19/418

(54) **METHOD AND SYSTEM FOR MONITORING AN EQUIPMENT OF A PROCESS OR MANUFACTURING PLANT**

(71) Applicant: BASF SE, 67056 Ludwigshafen am Rhein (DE)
(72) Inventor: VORSPRACH, Michel, Ludwigshafen am Rhein, 67056 (DE); KASTEN, Kristian, Ludwigshafen am Rhein, 67056 (DE); KOFFLER, Kathrin Luise, Ludwigshafen am Rhein, 67056 (DE); KURZ, Julian Matthis, Heidelberg (DE)
(74) Representative: BASF IP Association

(57) **Abstract**

A method of monitoring of equipment (20, 30) in plant (1) is provided. Said equipment produces continued or discrete time series data with comparable cycles or periodic patterns during process cycles. The plant (1) has a process automation accomplished by at least a first automation layer (100, 200). At least one sensor (110, 120) detects parameters of equipment (20, 30). The sensor is assigned to the first process automation layer (100), wherein an Edge computing device (230, 310, 420) is provided. Parameter of the equipment (20, 30) are detected by the sensor (110, 120). A first key performance indicator (KPI1) is determined based on the parameters. The first key performance indicators (KPI1) is compared with a reference value of the equipment (20, 30) in the Edge computing device (230, 310, 420) to detect behavioural changes of the equipment (20, 30).

## Description

### FIELD OF THE INVENTION

The invention relates to a method and system for monitoring an equipment of a process or manufacturing plant, e.g. a chemical plant.

### BACKGROUND OF THE INVENTION

Industrial plants like a chemical production plant are a highly security sensitive production environment. E.g. chemical plants typically include multiple assets to produce chemical products. Multiple sensors are distributed in such plants for monitoring or controlling purposes as well as for collecting data. Hence, an industrial production results in a huge amount of data. Applying new technologies in cloud computing and big data analytics is therefore of great interest. Unlike other manufacturing industries, however, process industry is subject to very high security standards. For this reason, computing infrastructures are typically compartmented with highly restrictive access to monitoring and control systems. Therefore, latency and availability considerations contravene a simple migration of current embedded control systems to e.g. a cloud computing system or data analysing systems. It is therefore a challenge to bridge the gap between highly proprietary industrial manufacturing systems and cloud technologies.

US2022092477A1 discloses a detection of deviation from an operating state of a device based on trained anomaly score model.

### SUMMARY OF THE INVENTION

The object of the presented invention is to provide an improved method and system for monitoring equipment in a chemical plant.

This object is solved by a method according to claim 1 and a system for monitoring equipment in a chemical plant according to claim 10.

Therefore, a method of monitoring of equipment in a process plant or manufacturing plant, in particular a chemical plant is provided. Said equipment serves to produce continued or discrete time series data with comparable cycles or periodic patterns during process or manufacturing cycles. The plant has a process automation accomplished by at least a first automation layer. At least one sensor is configured to detect parameters of the equipment or parameters associated to the equipment of the plant and is directly or indirectly assigned to the first process automation layer. The at least one Edge computing device is assigned to the second process automation layer. Parameters of the equipment or parameters associated to the equipment are by the at least one sensor assigned to the first process automation layer. At least one first key performance indicator is determined based on the detected parameters. The at least one first key performance indicator (KPI) is compared with a reference value, a historical value or with at least one second key performance indicator derived from on a mathematical or statistical model, in particular a digital twin, of the equipment in the Edge computing device to detect behavioural changes of the equipment. The mathematical or statistical model is derived from a model space of normal observed equipment behaviour of the parameters of the equipment, the parameters associated to the equipment, parameters of reference equipment or the parameters associated to the reference equipment, in particular during at least one processing cycle.

The equipment relates to the part of the plant that need to be monitored. The equipment is thus the machine in the plant that is to be monitored.

The key performance indicator KPI can relate to parameter directly measured from the equipment or parameters from other related utilities (such as e.g. gearboxes, motors, frequency converters, lubrication systems etc.) which are associated to the equipment.

Hence, the KPIs can also be determined based on parameters which do not directly relate to equipment but which are indirectly linked to the operation of the equipment.

By using the KPIs to monitor the equipment, the computational requirements can be reduced.

In an example, the detected parameters are compared with the mathematical model, in particular the digital twin, of the equipment or reference equipment by the Edge computing device assigned to the second process automation layer to determine variations and/or abnormalities of the detected parameters to detect behavioural changes of the equipment.

Hence, a two step approach can be implemented to monitor the equipment. In the first step only the KPI are monitored and in a second step the detected parameter are compared to the model. This allows a more precise monitoring of the equipment. The parameter can include an input of the model, time series data, physical constants. The parameter can be calculated, or measured values. The parameter can also be a constant value. The parameters can be a pressure overtime, vibrations overtime, temperature overtime, current over time, or voltage over time.

In an example, the calculation of the mathematical model is performed with a O(1) memory to enable a constant random access memory usage or with a O(N) memory allowing a linear dependency regarding the amount of data to be processed and the required random access memory. The O(1) and O(N) are Landau symbols or symbols according to a O-notation (big O-notation).

In an example, at least one first digital fingerprint is based on the at least one first key performance indicator, and at least one second digital fingerprint is based on the at least one second key performance indicator. The at least one first and second fingerprint are compared to detect behavioural changes of the equipment.

In an example, a behaviour of the equipment is classified into normal operation and fault operation based on the comparison of the first and second fingerprints.

In an example, the mathematical model is determined as error free by comparing the detected parameters of a reference equipment or parameter associated with the reference equipment.

In an example, the model is determined by a cloud processing entity and is transferred to the Edge computing device.

In an example, the KPIs comprise first basic KPIs based on basic statistical principles based on measurements of the parameter of the equipment, and third advanced KPIs are based on complex statistical models derived from parameters of a multitude of equipment process cycles of an error-free equipment.

According to a further aspect, a system of monitoring of equipment in a chemical plant is provided. Said equipment is configured to produce continued time series data with comparable cycles or periodic patterns during process cycles. A first process automation layer is provided. At least one sensor is configured to detect parameters of the equipment or parameters associated to the equipment and is directly or indirectly assigned to the first process automation layer. A second layer is configured to implement a process control system (200) based on data form the sensors assigned to the first layer. At least one Edge computing device is assigned to the second process automation layer. The at least one Edge computing unit is configured to receive parameters from the sensors , to analyse the received parameter, and to determine at least one first key performance indicator based on the detected parameters. The Edge computing unit is configured to compare the at least one first key performance indicators with at least one second key performance indicator derived on a mathematical or statistical model, in particular a digital twin, of the equipment to detect behavioural changes of the equipment. The mathematical or statistical model is derived from mathematical room of normal observed equipment behaviour of the parameters of the equipment the parameters associated to the equipment, parameters of reference equipment or the parameters associated to the reference equipment, in particular during at least one processing cycle.

In a chemical plant, the operation of an equipment like a pump as part of the assets in the chemical plant is monitored to determine whether the pump is operating correctly. The plant comprises at least a first and a second layer of (hierarchical) process automation layers. Via a sensor assigned to a first layer of the chemical plant, parameters (like a pump angle, a pressure or a vibration) of the pump are determined. Thereupon, a mathematical model of the pump is determined, e.g. in the cloud, based on measurements of parameters of a reference pump over several pump cycles. The reference pump can be determined to be substantially error-free before the measurements for the model are conducted. Thus error-free reference measurements and an error-free model can be derived.

Based on the measured parameters, an Edge computing device assigned e.g. to a second processing layer determines first basic KPls. These current KPIs are compared to KPI from a mathematical model of the pump.

As the mathematical model is derived by a cloud processing entity in the cloud, the processing power of the cloud can be used. Once the mathematical model is derived by the processing entity, the model is transferred to the Edge computing device in the chemical plant. The Edge computing device compares the current measurements and/or the current KPI with the data from e.g. the deterministic and transparent model of the equipment like a pump. As the Edge computing device is arranged or assigned to in the second processing layer of the chemical plant the processing can be performed with a low latency. The models can use the same processing memory. The training of the models can be interrupted and the training can be continued later on.

In an example, the Edge computing device can forward the calculated KPI to the processing entity in the cloud, where the KPI can be used for further processing and analysis.

A system for monitoring product processing equipment of an industrial plant can be provided. The system comprises a first layer having a plurality of sensors configured to detect parameters of the reciprocating positive displacement pump. The system furthermore comprises a second layer configured to implement a process control system based on data from the first layer. The system also comprises at least one Internet-of-Things loT Edge unit in the second layer to receive data from the first or second layer and to analyse the received data based in the mathematical model of the pump provided by the cloud processing entity.

According to an example, a method of monitoring mentioned industrial plant equipment is provided. A plurality of sensors detect parameters of equipment of an industrial plant in a first layer. In a second layer, a process control system based is implemented based on data from the first layer. The system also comprises at least one Internet-of-Things loT Edge unit in the second layer to receive data from the first or second layer and to analyse the received data.

According to an example, the industrial plant may comprise a control system for controlling the operation of the elements of the industrial plant. The industrial plant comprises a plurality of sensors for monitoring the equipment of the industrial plant. The industrial plant may also comprise a condition monitoring system (CMS), a machine protection system (MPS) and/or a process information management system (PIMS). The monitoring system can use or share the hardware of the control system for the industrial plant.

According to an aspect of the invention, a computer program is provided for monitoring assets in a chemical plant, the program comprising code means for causing the system to execute a method as described above, when the program is run on a computer controlling the system.

The process control system of the industrial plant can be implemented structured as an automation pyramid (level 1 - level 5) or a pyramid according to the NAMUR pyramid.

Cloud computing can include workloads executed in the cloud and/or workloads provided from a cloud-service over a communications network for execution on edge computing devices. A cloud service providing such workloads for execution on an edge computing device may license the use of such workloads based on the actual use of the workload on the edge computing device, but securely tracking such actual use at the edge computing device is challenging. For example, a knowledgeable user can alter a device's date and time settings, block an application module from reconnecting to the cloud service, hack the workload, etc. to circumvent the metering efforts by the cloud service

Edge computing (for example performed by an loT Edge computing unit) relates to a distributed computing capability arranged in the vicinity of a source of data. Accordingly, instead of arranging the computing capabilities exclusively in the cloud, a number of loT Edge units may be provided in or close to an industrial plant. This is advantageous as it reduces the required bandwidth towards the cloud and it can also reduce the latency of the processing.

According to an example, the fingerprints can be calculated in situ or later. In some cases the monitoring does not need to be performed in real time such that the KPI and the fingerprints can be calculated later.

It shall be understood that the aspects described above and specifically the method for monitoring equipment in a process or manufacturing plant of claim 1, the system of claim 10 and the computer program of claim 12 have similar and/or identical preferred embodiments in particular as defined in the dependent claims.

It shall be understood that a preferred embodiment or aspect of the present invention can also be any combination of the dependent claims or above embodiments or aspects with a respective independent claim.

These and other aspects of the present invention will be apparent from and elucidated with reference to the embodiments described hereafter.

### BRIEF DESCRIPTION OF THE DRAWINGS

- Fig.1A - 1C: each show a block diagram of a system for monitoring an industrial plant,
- Fig. 2: shows a graph depicting an operational cycle of an asset, namely a pump,
- Fig. 3: shows a graph depicting a pressure diagram and a vibrational signal over an angle of a pump,
- Fig. 4: shows a mean pressure diagram of a pump,
- Fig. 5: shows a pressure diagram with a delayed discharge valve opening,
- Fig. 6: shows a pressure diagram where a suction valve does not close,
- Fig. 7: shows a pressure diagram with a full cavitation,
- Fig. 8: shows a pressure diagram where a discharge valve does not close,
- Fig. 9: shows a pressure diagram with a delayed suction valve closing, and
- Fig. 10: shows a pressure diagram with a gas formation.

### DETAILED DESCRIPTION

In industrial plants (e.g. chemical plants) typically a great number of equipment is used to produce the desired product. The parameter of this equipment must be detected and the equipment is controlled by a control system based on the detected parameters.

E.g. a chemical process industrial production typically starts with upstream products, which are used to derive further downstream products. The value chain production via various intermediate products to an end product is highly restrictive and based on separate infrastructures. This is detrimental to an introduction of new technologies such as Internet of Things (loT), cloud computing and big data analytics. The process industry is subject to very high standards in particular with regard to availability and security. Hence, computing infrastructures are typically unidirectional and isolated with highly restrictive access to monitoring and control systems of chemical plants. In general, chemical production plants are embedded in an enterprise architecture in an isolated way with different layers to realize a functional separation between operational technology and information technology solutions. These layers are described in the automation pyramid or NAMUR pyramid.

The industrial plant can be implemented as a chemical plant, a chemical processing plant, or a chemical product processing plant.

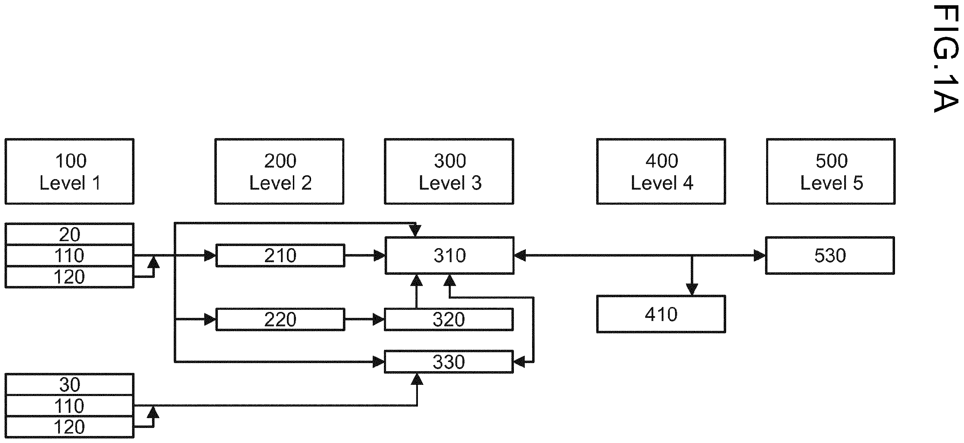

Fig.1A - 1C each show a schematic block diagram depicting a system for monitoring a chemical plant. The process control system of the industrial plant can be implemented as an automation pyramid (level 1 - level 5) or a pyramid according to the NAMUR pyramid. The process control system for the chemical plant can be represented by a number of process automation layers. A first process automation layer 100 (Level 1) can relate to the physical processes in the plant 10. In the first layer 100, a plurality of sensors 110, 120 are arranged or are assigned to in order to measure or determine various parameters of equipment 20, 30 in the plant 100. In the present scenario, the equipment 20, 30 can be implemented as a pump like a reciprocating positive displacement pump. Furthermore, the first layer 100 (Level 1) may relate to devices, or intelligent devices, for sensing and manipulating the physical processes, e.g. via process sensors, analysers and actuators.

A second layer 200 (Level 2) of the mentioned hierarchy can relate to process control systems for the industrial plant 100 or part of the industrial plant 100. The second layer 200 (Level 2) can comprise several processing units, like a condition monitoring system CMS 210, and/or a machine protection system MPS 220. Moreover, optimally an analysing unit 230 in form of an Edge computing device, which can perform analysing operations is provided in the Level 2. The condition monitoring system CMS 210, the machine protection system MPS 220, and/or the analysing unit 230 use the data from the sensors 110, 120 in the first layer 100 as input to perform their respective function or processing operation. The second layer 200 is thus used for supervising, monitoring and controlling the physical processes in the industrial plant. Real-time controls and software; process information management system PIMS, human-machine interface HMI; supervisory and data acquisition SCADA software may also be part of the second layer 200.

The analyzing unit (the Edge computing device unit) can serve to monitor equipment like the pumps in the chemical plant.

A third layer 300 (Level 3) of the mentioned hierarchy can relate to an operational control system, i.e. to manufacturing/production operations systems for managing production work-flow to produce the desired products. Here, a process information management system PIMS 330 can be provided. Moreover, a condition monitoring system 320can be provided. Furthermore, batch management; manufacturing execution/operations management systems (MES/MOMS); laboratory, maintenance and plant performance management systems, data historians and related middleware can be further components of the third layer 300. Time frames for controlling and monitoring may be shifts, hours, minutes, seconds.

Optionally an analysing units 310 can be implemented as an Internet-of-Things loT Edge computing device

Edge computing for example performed by an loT Edge relates to a distributed computing capability arranged in the vicinity of a source of data. Accordingly, instead of arranging the computing capabilities exclusively in the cloud, a number of Edge units may be provided in or close to an industrial plant. This is advantageous as it reduces the required bandwidth towards the cloud and it can also reduce the latency of the processing.

A fourth layer 400 (Level 4) of the mentioned hierarchy can relate to business logistics systems for managing the business-related activities of the manufacturing operation. ERP is the primary system and establishes the basic plant production schedule, material use, shipping and inventory layers. Time frame may be months, weeks, days, shifts. At level 4 a workstation 410 can be provided and can be used as a trigger option for generating mathematic model.

According to an example, at least one loT Edge computing device is provided in the Level 2, Level 3 or Level 4. In otherwords, the function oroperation of the Edge computing device can be performed in either of the Level 2, Level 3 or Level 4. These loT Edge computing devices 230, 310, 420 can perform part of the required computing or processing for monitoring the equipment like a reciprocating positive displacement pump.Hence, the Edge computing device can be provided as analysing unit 230 in the second level 200, as an Edge computing device 310 in the third level 300 and/or as an Edge computing device 420 in the fourth level.

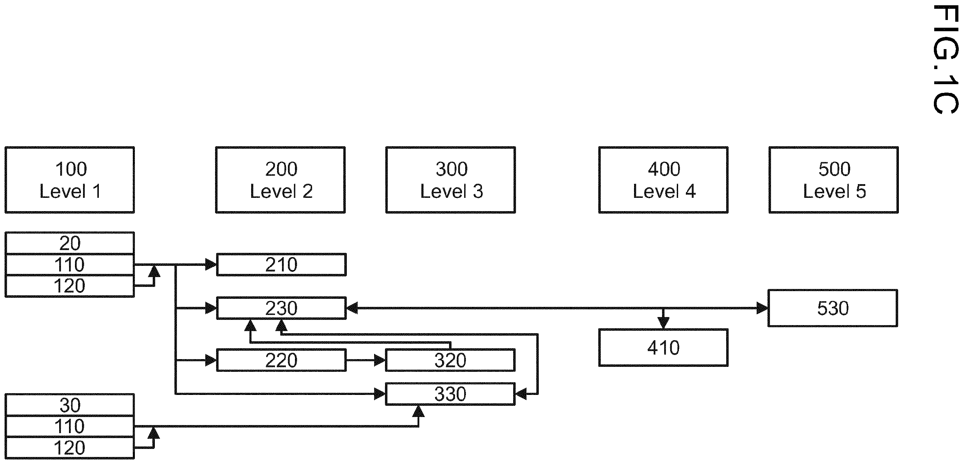

The Edge computing device 230 in the second level 200 is shown in Fig. 1C. The Edge computing device 230 is coupled to the first level with the equipment 20 and the sensors 110, 120 and receives data or signals from them. The edge computing device 230 can also be coupled to the cloud processing entity 530 to transfer generated mathematic model from cloud to edge computing device 230.

The Edge computing device 310 in the third level 300 is shown in Fig. 1A. The Edge computing device 310 is coupled to the first level 100 with the equipment 20 and the sensors 110, 120 and receives data or signals from them. The edge computing device 310 can also be coupled to the cloud processing entity 530 to transfer generated mathematic model from cloud to edge computing device 310.

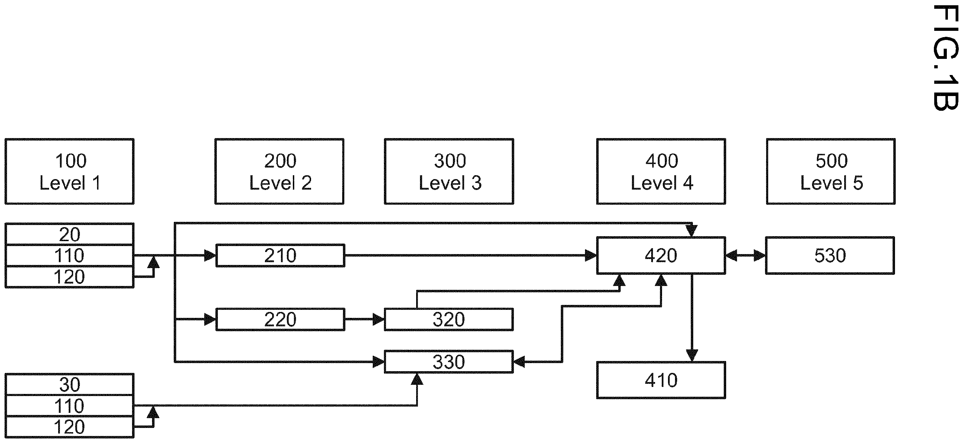

The Edge computing device 420 in the fourth level 400 is shown in Fig. 1B. The Edge computing device 420 is coupled to the first level with the equipment 20 and the sensors 110, 120 and receives data or signals from them. The edge computing device 420 can also be coupled to the cloud processing entity 530 to transfer generated mathematic model from cloud to edge computing device 420.

Accordingly, an Edge computing device can be provided at Level 2, Level 3 or Level 4,

A fifth layer 500 can relate to cloud services 500. The cloud services 500 may comprise a cloud processing entity 530 which can be implemented as a cloud server or cloud service. The cloud processing entity 530 can be a central data sink or several distributed or mirrored data sinks.

In the cloud processing entity 530, a mathematic model of a pump may be generated. The mathematical model can be an unsupervised model. A mathematical model can be generated by the cloud processing entity based on parameters of a reference pump for example over at least one pumping cycle. These parameters can be a pressure over a pumping cycle or a vibration over a pumping cycle. Therefore, a pressure overtime (pumping cycle) as well as the vibration over time (pumping cycle) can be obtained from the sensors detecting the parameters of the pumps. The reference pump can be an already known pump in the chemical plant 1.

When the cloud processing entity 530 has determined the mathematical model of a pump, this mathematical model can be forwarded to the Edge computing device 230 for example in the second or third layer 200. Here, the mathematical model can be used by the Edge computing device 230 to determine whether the currently detected parameters of the pumps correspond to normal values or relate to deviations from the expected parameters.

The sensors 110 - 120 can be pressure sensor, vibration sensors or sensors to determine an angle of the pump or pump head.

A fifth layer 500 of the mentioned hierarchy may be configured as a centralized cloud computing platform. The fifth layer 500 may be configured as a manufacturing/production/processing data workspace with full data integration across multiple plants including manufacturing/production/processing data history transport & streaming, collection of all data from all edge components. This way the full contextualization of all lower layer context may be integrated on the fifth layer 500 for multiple plants. Thus the fifth layer 500 may be further configured to run cloud-native apps, connect with external PaaS and Saas tenants, integrate machine learning with manufacturing data & processes, traintest-deploy, and/or visualize data, access apps, orchestrate.

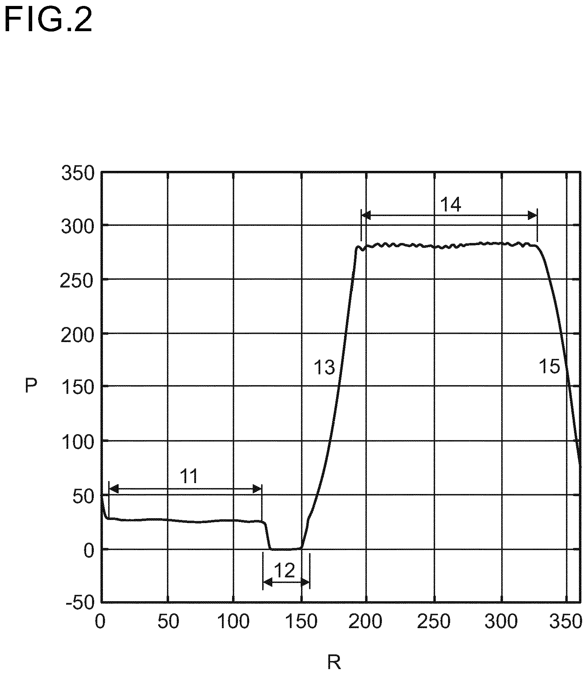

Fig. 2 shows a graph depicting an operational cycle of an asset, namely a pump according to an embodiment. The graph discloses the pressure P over a rotational angle R The pump cycle 10 includes a suction phase 11, a snifting phase 12, a compression phase 13, a discharge phase 14 and an expansion phase 15.

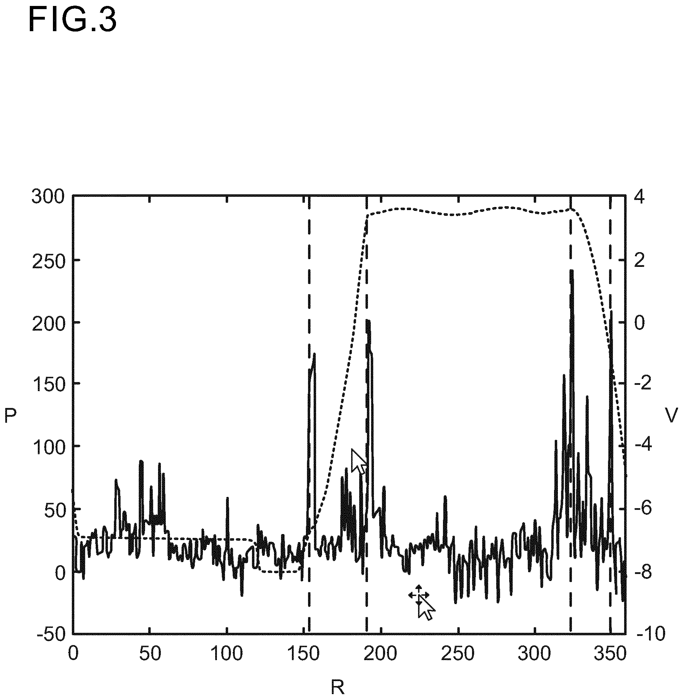

Fig. 3 shows another embodiment of a graph depicting a pressure diagram and a vibrational signal over an angle of a pump. The pressure over rotational angle graph corresponds to the graph of Fig. 2. In Fig. 3, the relationship between the vibration and the pressure over the rotation angle and therefore over time is depicted. As an example, the graph of Fig. 2 and/or the graph of Fig. 3 can correspond to the data that the cloud processing entity uses to determine a mathematical model of the pump. Accordingly, the cloud processing entity 530 can determine a mathematical model of a pump based on the pressure information and a further mathematical model based on the vibration information. Alternatively, the cloud processing entity can determine a mathematical model based on the pressure information as well as the vibration information.

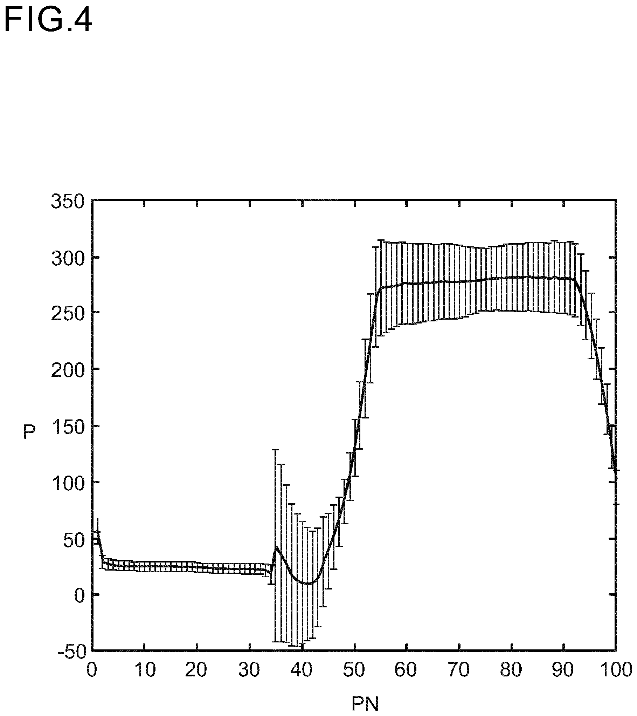

Fig. 4 shows a mean pressure diagram of a pump. In Fig. 4, the pressure over a point number is depicted. Accordingly, a correct and error free mean pressure P of the pump over time or over a point number PN is depicted. These data can be used by the cloud processing entity 530 to determine the mathematical model.

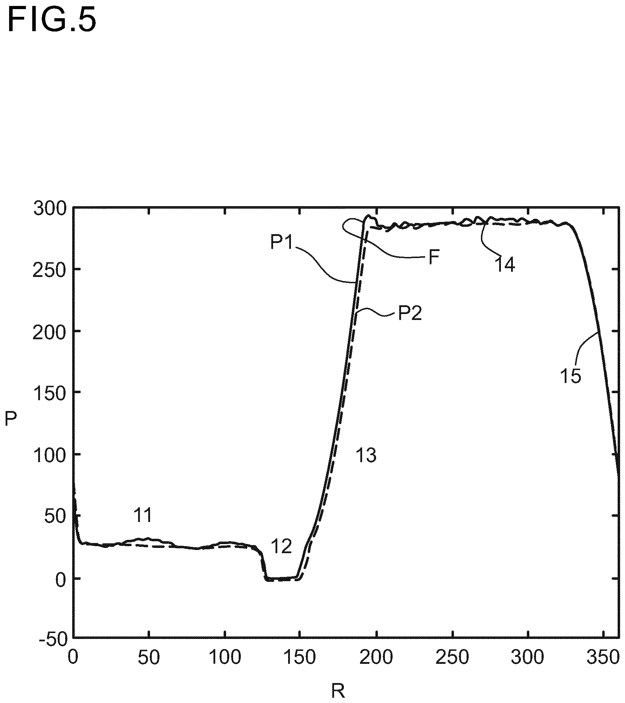

Fig. 5 shows a pressure diagram with a delayed discharge valve opening. Therefore, Fig. 5 shows the pressure P over rotational angle R relationship under normal condition as well as a failure. The failure relates to a delayed discharge valve opening. Accordingly, the discharge valve does not open when required but only after a delay. In Fig. 5, the normal operation is depicted as graph P2 and the faulty operation is depicted as graph P1. The failure is in particular obvious at the beginning of the discharge phase 14, i.e. at the transition at the end of the compression phase 13 and the beginning of the discharge phase 14.

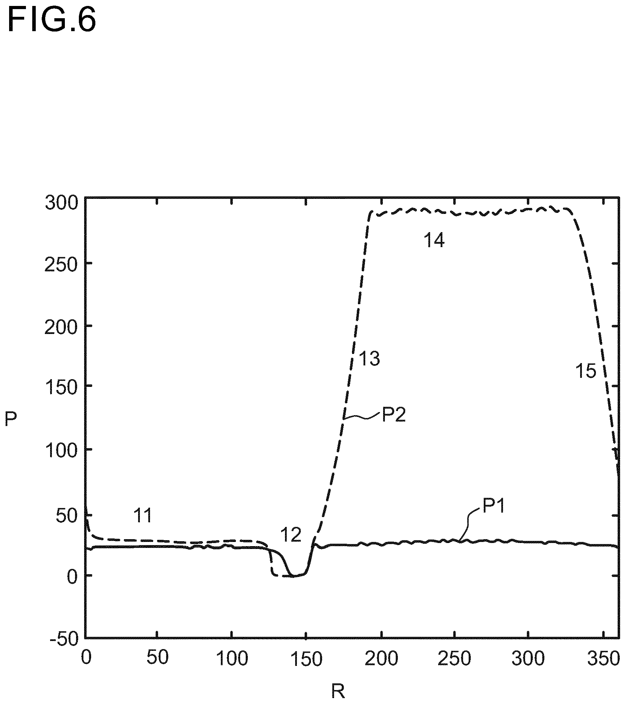

Fig. 6 shows a pressure diagram of a failure where the suction valve does not close. In Fig. 6, the pressure graph P2 of normal operation and the pressure graph P1 of a failure is disclosed. In the case of Fig. 6, the suction valve does not close such that after the end of the snifting phase 12 and the beginning of the compression phase 13, there is no compression such that the pressure will not increase as intended but will stay at a low level.

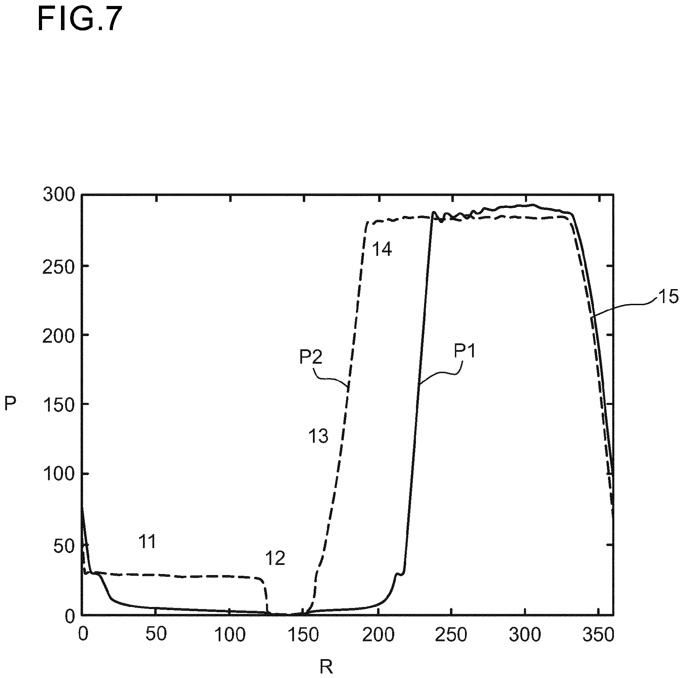

Fig. 7 shows a pressure diagram with a failure, namely a full cavitation. In Fig. 7, a pressure curve P2 of a normal operation is depicted. Furthermore, a pressure P1 is depicted with a failure. This failure relates to a full cavitation such that the suction phase 11 and the compression phase have not been performed correctly.

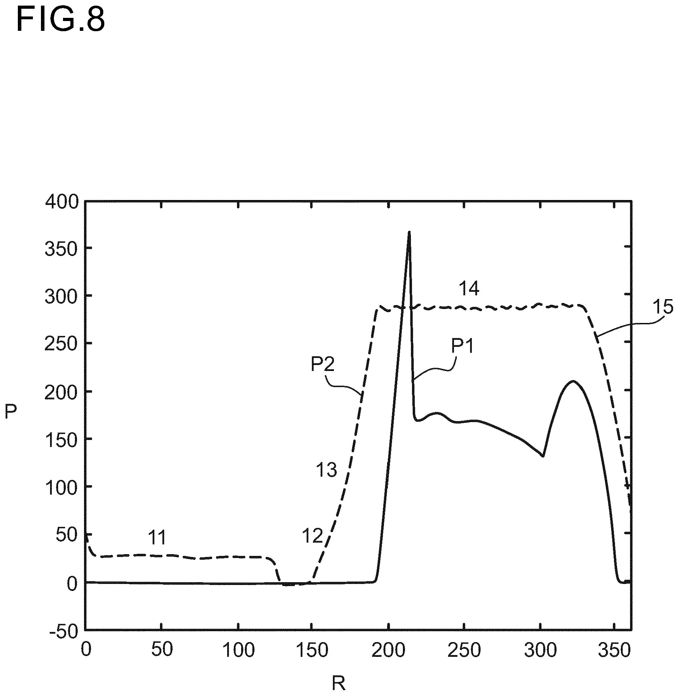

Fig. 8 shows a pressure diagram of a further failure where a discharge valve does not close. In Fig. 7, a normal operation P2 as well as a faulty operation P1 is disclosed. In this case, the faulty operation P1 results in the defect of the discharge valve, in particular that the discharge does not open.

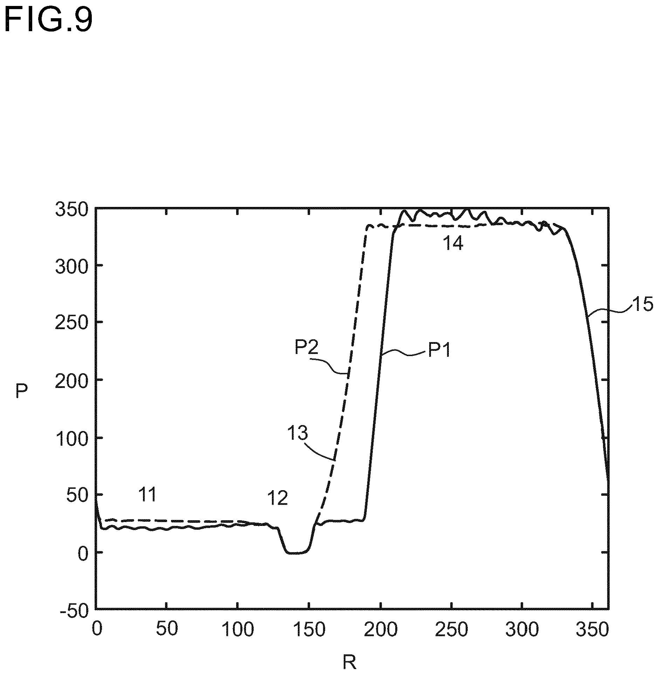

Fig. 9 shows a pressure diagram with a failure where a delayed suction valve closing is present. In Fig. 9, a pressure diagram P2 under normal operation and a pressure diagram P1 under faulty operation is disclosed. The faulty operation of the pressure diagram P1 results from a delayed suction valve closing. Here, in particular at the end of the snifting phase 12 and the beginning of the compression phase 13, a delay is present such that the compression phase is started in a delayed fashion. This also results in ripple at the discharge phase 14.

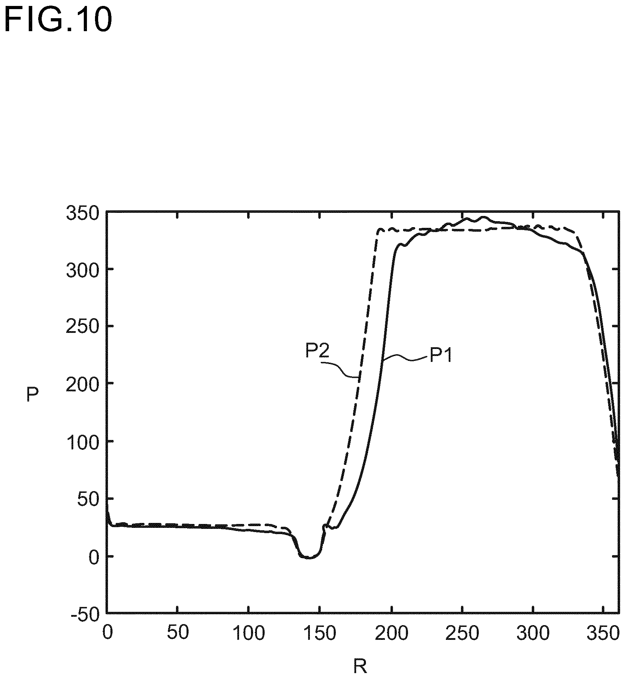

Fig. 10 shows a pressure diagram with a failure, namely a gas formation. In Fig. 10, the pressure diagram P2 under normal operation and the pressure diagram P1 under faulty conditions are depicted. Here, the faulty condition originates at the end of the snifting phase such that the compression phase 13 is delayed. This can also result in ripple at the discharge phase 14.

According to an example, the mathematical model of a pump (as generated by the cloud processing entity) can be forwarded to the Edge unit 230, where the mathematical model is stored to enable the Edge computing device to compare the parameters of the pumps, namely the pressure and/or the vibration signal to compare these signals with the mathematical model in order to determine whether the detected parameters are correct parameters or relate to a failure of the pump. Accordingly, the condition of the pump can be compared to the mathematical model of the pump. Furthermore, different pumps in the chemical plant can be compared to each other.

Based on the results of the comparison, the data from the pump can be forwarded to a cloud service or cloud server if no fault has been detected.

The cloud processing entity 530 can determine key performance indicators KPI based on the mathematical model which it has generated. The key performance indicators based on the mathematical model can be compared to key performance indicators KPI which have been derived from the current signals of the pump. Accordingly, KPIs based on the mathematical model can be compared to KPls based on the actual parameters of the actual and current parameters of the pump.

The key performance indicators can relate to first level key performance indicators which can be based on the pressure measurement, the vibration measurement and/or the engine angle measurements. Accordingly, the KPIs can be the pressure, the minimum pressure, the maximum pressure, the mean pressure, the medium pressure or the pulsation (the maximum pressure minus the minimum pressure). Regarding vibration, a KPI can be the absolute vibration.

Furthermore, volatile phase KPls can be the mean pressure gradient or the absolute vibration.

Furthermore, advanced KPIs can relate to the fingerprint of the system. The advanced KPIs can be based on complex statistical models, where thousands of healthy pump cycles are examined to be able to determine a healthy pump cycle overtime. The advanced KPIs can include a variance where variants are detected relative to a healthy signal. For example, a standard deviation can be determined which may be outside of a normal value.

As an example, KPls may use sliding RMS windows where an energy of moving windows is measured. Here, multiple sensor values can be included to determine how violent the vibration on average can be. This may be relevant for opening and closing of valves. Moreover, a vibration histogram can be determined. Here, a range where individual vibrations normally occur can be lost when they are converted into energy. Thus, histograms of an average vibration range can be determined.

Furthermore, advanced KPIs may be used for dynamic time wrapping. Here, one pump head can be compared to other pump heads to determine if one pump head behaves differently from the others. If this is the case, it should be determined why this has happened. The advanced KPIs can be used if a value is beyond two standard deviations from a central graph, a lower CL = avg - 2stddev, an upper CL = avg + 2stddev. Furthermore, if the value is outside the range of 0,5 / 0,75 of an inter quartile range IQR. Furthermore, it can be determined whether the vibration value is outside of the vibration histogram. During volatile phases like compression and expansion, it is determined whether the pressure gradient is not out of bound. Moreover, a dynamic time warping can be included as a measure of each pump head compared to all other pump heads. Furthermore, second level advanced KPIs can be derived from first level KPIs. The use can be determined and may include looking for a number of KPI violations or looking at specific energy windows of known valve openings.

In addition, production KPIs can be determined. In addition to the basic KPIs based on a high resolution pressure and vibration signals, further calculated KPIs can be included. These can be calculated from machines and substance data. The KPIs can be useful to prevent damage from components of the pumps. Advantageously, the KPIs are captured at the Edge computing device and can be forwarded the cloud service. Such a KPI can be pump speed or the duration thereof. Moreover, a volume flow, a mass flow, operating hours, operating hours reset data (hours per day), operating hours since reset (a time range) and operating hours in hours can be determined.

The chemical plant can refer to any manufacturing facility based on chemical processes, e.g. transforming a feedstock to a product using chemical processes. In contrast to discrete manufacturing, chemical manufacturing is based on continuous or batch processes. As such monitoring and/or controlling of chemical plants is time dependent and hence based on large time series data sets. A chemical plant may include more than 1.000 sensors producing measurement data points every couple of seconds. Such dimensions result in multiple terabytes of data to be handled in a system for controlling and/or monitoring chemical plants. A small-scale chemical plant may include a couple of thousand sensors producing data points every 1 to 10s. For comparison a large-scale chemical plant may include a couple of ten-thousand sensors, e.g. 10.000 to 30.000, producing data points every 1 to 10s. Contextualizing such data results in the handling of multiple hundred gigabytes to multiple terabytes.

Chemical plants may produce a product via one or more chemical processes transforming the feedstock via one or more intermediate products to the product. Preferably, a chemical plant provides an encapsulated facility producing a product, that may be used as feedstock for the next steps in the value chain. Chemical plants may be large-scale plants like oil and gas facilities, gas cleaning plants, carbon dioxide capture facilities, liquefied natural gas (LNG) plants, oil refineries, petro-chemical facilities or chemical facilities. Upstream chemical plants in petrochemicals process production for example include a steamcracker starting with naphtha being processed to ethylene and propylene. These upstream products may then be provided to further chemical plants to derive downstream products such as polyethylene or polypropylene, which may again serve as feedstock for chemical plants deriving further downstream products. Chemical plants may be used to manufacture discrete products. In one example one chemical plant may be used to manufacture precursors for polyurethane foam. Such precursors may be provided to a second chemical plant for the manufacture of discrete products, such as an isolation plate comprising polyurethane foam.

The value chain production via various intermediate products to an end product can be decentralized in various locations or integrated in a Verbund site or a chemical park. Such Verbund sites or chemical parks comprise a network of interconnected chemical plants, where products manufactured in one plant can serve as a feedstock for another plant.

Chemical plants may include multiple assets, such as heat exchangers, reactors, pumps, pipes, distillation or absorption columns to name a few of them. In chemical plants, some assets may be critical. Critical assets are those, which when disrupted critically impact plant operation. This can lead to manufacturing processes being compromised. Reduced product quality or even manufacturing stops may the result. In the worst-case scenario fire, explosion or toxic gas release may be the result of such disruption. Hence, such critical assets may require more rigorous monitoring and/or controlling then other assets depending on the chemical processes and the chemicals involved. To monitor and/or control chemical processes and assets multiple actors and sensors may be embedded in the chemical plant. Such actors or sensors may provide process or asset specific data relating to e.g. the state of an individual asset, the state of an individual actor, the composition of a chemical, or the state of a chemical process. In particular, process or asset specific data may include one or more of the following data categories: process operation data, such as composition of a feedstock or an intermediate product, process monitoring data, such as flow, material temperature, asset operation data, such as current, voltage, and asset monitoring data, such as asset temperature, asset pressure, vibrations.

Assets may include any component of the chemical plant, such as equipment, instrumentation, machine, process or process component.

Process or asset specific data refers to data relating to a specific asset or process and contextualized with respect to such specific asset or process. Process or asset specific data may be contextualized only with respect to individual assets and processes. Process or asset specific data may include measurement value, data quality measure, time, measurement unit, asset identifier for specific assets or process identifier for a specific process sections or stages. Such process or asset specific data may be collected on the lowest processing layer and contextualized with respect to specific assets or processes in a single plant. Such contextualization may relate to context available on the lowest processing layer. Such context may relate to a single plant.

Plant specific data refers to process or asset specific data that is contextualized with respect to one or more plant(s). Such plant specific data may be collected on a further higher processing layer and contextualized with respect to multiple plants. Specifically, contextualization may relate to context available on the higher processing layer. Via contextualization context such as plant identifier, plant type, reliability indicator, or alarm limits for the plant may be added to process or asset specific data points. In a further step technical asset structure of one or more plant(s), a Verbund site or a chemical park, other asset management structure (e.g. asset network), or application context (e.g. model identifier, third party exchange) may be added. Such overarching context can originate from functional locations or digital twins, such as digital piping and instrumentation diagrams, 3D models or scans with xyz coordinates of the plant assets. Additionally or alternatively, local scans from mobile devices linked to e.g. piping and instrumentation diagrams may be used for contextualization.

In particular, plant specific data relating to interfaces between chemical plants in a manufacturing chain may be provided on the higher processing layer or the external processing layer. Thus, monitoring and/or controlling, e.g. via anomaly detection, setpoint steering and optimization in chains across multiple plants, can be enhanced. For monitoring and/or controlling the chain across multiple plants, process applications with online in/out data profiles may be used. Such data and process applications may be transferred between plants. Combined with mass and energy balances that can be monitored, such process applications may optimize the full chain across chemical plants rather than individual plants in the chain.

The input data may include real time data from sensors, such as wireless monitoring devices or loT devices, non-real time data, or output data of deployed containers or executed applications. Such data may relate to machinery, such as machinery type or sensor data measured with respect to the machinery, chemicals, such as chemicals type or sensor data measured with respect to chemical components processed in the chemical plant, processes, such as chemical process type or sensor data measured with respect to the chemical processes performed in the chemical plant, and/or plant, such as plant type or sensor data measured with respect to the chemical plant, e.g. environmental measurement data.

A single unit device or system may fulfil the functions of several items recited in the claims. The mere fact that certain measures are recited in mutually different dependent claims does not indicate that a combination of these measures cannot be used to advantage. Procedures like the analysis of data and the adding of metadata to the data etc. performed by one or several units or devices can be performed by any other number of units, devices or systems. These procedures can be implemented as a program code means of a computer program and/or as dedicated hardware. A computer program product may be stored/distributed on a suitable medium such as an optical storage medium or a solid state medium supplied together with or as part of other hardware but may also be distributed in other form such as via the internet or other wired or wireless telecommunication systems.

Any reference signs in the claims should not be constructed as limiting the scope.

### List of reference signs

- 1: chemical plant
- 10: pump cycle
- 11: suction phase
- 12: snifting phase
- 13: compression
- 14: discharge phase
- 15: expansion
- 20: pump
- 30: pump
- 100: first layer
- 110: sensors
- 120: sensors
- 200: second layer
- 210: condition monitoring system CMS
- 220: machine protection system MPS
- 230: Edge computing device
- 300: third layer
- 310: Edge computing unit
- 320: condition monitoring system (CMS)
- 330: process information management system (PIMS)
- 400: fourth layer
- 410: working station
- 420: Edge computing device
- 500: fifth layer
- 530: cloud processing entity
- CMS: condition monitoring system
- KPI1: first key performance indicator
- KPI2: second key performance indicator
- MPS: machine protection system
- P: pressure
- P1: fault operation graph
- P2: normal operation graph
- PN: point number
- R: rotational angle

## Claims

1. Method of monitoring of equipment (20, 30) in a process or manufacturing plant (1), said equipment producing continued or discrete time series data with comparable cycles or periodic patterns during process cycles, said process or manufacturing plant (1) having a process automation accomplished by at least a first automation layer (100, 200), wherein at least one sensor (110, 120) configured to detect parameters of the equipment (20, 30) or parameters associated to the equipment (20, 30) of the plant is directly or indirectly assigned to the first process automation layer (100), wherein at least one Edge computing device (230, 310, 420) is provided), the method comprising the steps:
- detecting parameter of the equipment (20, 30) or parameters associated to the equipment (20, 30) by the at least one sensor (110, 120) assigned to the first process automation layer (100);
- determining at least one first key performance indicator (KPI1) based on the detected parameters, and
- comparing the at least one first key performance indicators (KPI1) with a reference value, a historical value or with at least one second key performance indicator (KPI2) derived from on a mathematical, statistical or another type of model, in particular a digital twin, of the equipment (20, 30) in the Edge computing device (230, 310, 420) to detect behavioural changes of the equipment (20, 30),
wherein the mathematical, statistical or another type of model is derived from model space of normal observed equipment behaviour of the parameters of the equipment (20, 30), the parameters associated to the equipment (20, 30), parameters of reference equipment (20, 30) or the parameters associated to the reference equipment (20, 30), in particular during at least one processing cycle.

2. Method of monitoring of equipment (20, 30) in a process or manufacturing plant plant (1) according to claim 1, comprising the step
- comparing the detected parameters with the mathematical model, in particular the digital twin, of the equipment (20, 30) or reference equipment by the Edge computing device (230, 310, 420) to determine variations and/or abnormalities of the detected parameters of the monitored equipment (230, 310, 420)) to detect behavioural changes of the equipment (20, 30).

3. Method of monitoring of equipment (20, 30) in a process or manufacturing plant (1) according to claim 1 or 2, wherein
the calculation of the mathematical model is performed with a O(1) memory to enable a constant random access memory usage or with a O(N) memory allowing a linear dependency regarding the amount of data to be processed and the required random access memory.

4. Method of monitoring of equipment (20, 30) in a process or manufacturing plant (1) according to any one of the claims 1 -3, wherein
at least one first digital fingerprint is based on the at least one first key performance indicator (KPI1),
wherein at least one second digital fingerprint is based on the at least one second key performance indicator (KPI1), or
wherein the at least one first and second fingerprint are compared to detect behavioural changes of the equipment (20, 30),

5. Method of monitoring of equipment (20, 30) in a process or manufacturing plant (1) according to claim 4, further comprising the steps
classifying a behaviour of the equipment (20, 30) based on the comparison of the first and second fingerprints into normal operation and fault operation.

6. Method of monitoring of equipment (20, 30) in a process or manufacturing plant (1) according to any one of the claims 1 - 5, wherein
the mathematical model is determined as error free by comparing the detected parameters of a reference equipment or parameter associated with the reference equipment.

7. Method of monitoring of equipment (20, 30) in a process or manufacturing plant (1) according to any one of the claims 1 - 6 , wherein
the parameters of the equipment or the parameters associated to equipment (20, 30) are a pressure over time, vibrations over time, temperature over time, current over time, voltage, optical measurements, thermographical measurements, positional data, length measurements, distance measurements, ultrasonic measurements or any other measurement over time.

8. Method of monitoring of equipment (20, 30) in a process or manufacturing plant (1) according to any one of the claims 1 to 7, wherein
the model is determined by a cloud processing entity (530) and is transferred to the Edge computing device (230, 310, 420).

9. Method according to any one of the claims 1 to 8, wherein
the at least one sensor (110, 120) measures an engine angle of the pump, a pressure per pump or pump head or a vibration per pump or pump head.

10. Method according to any one of the claims 1 to 9, wherein
the mathematical model is an unsupervised model.

11. Method of monitoring of equipment (20, 30) in a process or manufacturing plant (1) according to any one of the claims 1 to 7, wherein
the KPIs comprise first basic KPIs based on basic statistical principles based on measurements of the parameter of the equipment (20, 30), third advanced KPIs may be based on additional models derived from parameters of a multitude of equipment process cycles of an error-free equipment.

12. System of monitoring of equipment (20, 30) in a process or manufacturing plant (1), wherein said equipment is configured to produce continued time series data with comparable cycles or periodic patterns during process cycles, comprising:
- a first process automation layer (100), wherein at least one sensor (110, 120) configured to detect parameters of the equipment (20, 30) or parameters associated to the equipment (20, 30) is directly or indirectly assigned to the first process automation layer (100),
- a second layer (200) configured to implement a process control system (200) based on data form the sensors (110 - 150) assigned to the first layer (100),
wherein at least one Edge computing device (230) is assigned to the second process automation layer (200), wherein the at least one Edge computing unit (230) is configured to receive parameters from the sensors (110 - 150), to analyse the received parameter, and to determine at least one first key performance indicator (KPI1) based on the detected parameters
wherein the Edge unit (230) is configured to compare the at least one first key performance indicators (KPI1) with at least one second key performance indicator (KPI2) derived on a mathematical or statistical model, in particular a digital twin, of the equipment (20, 30) to detect behavioural changes of the equipment (20, 30),
wherein the model is derived from model space of normal observed equipment behaviour of the parameters of the equipment (20, 30), the parameters associated to the equipment (20, 30), parameters of reference equipment (20, 30) or the parameters associated to the reference equipment (20, 30), in particular during at least one processing cycle.

13. Processing plant (1), comprising:
a system for monitoring of equipment (20, 30) in the plant (1), wherein said equipment is configured to produce continued time series data with comparable cycles or periodic patterns during process cycles, wherein the system comprises:
- a first process automation layer (100), wherein at least one sensor (110, 120) configured to detect parameters of the equipment (20, 30) or parameters associated to the equipment (20, 30) is directly or indirectly assigned to the first process automation layer (100),
- a second layer (200) configured to implement a process control system (200) based on data form the sensors (110 - 150) assigned to the first layer (100),
wherein at least one Edge computing device (230) is assigned to the second process automation layer (200), wherein the at least one Edge computing unit (230) is configured to receive parameters from the sensors (110 - 150), to analyse the received parameter, and to determine at least one first key performance indicator (KPI1) based on the detected parameters,
wherein the Edge unit (230) is configured to compare the at least one first key performance indicators (KPI1) with at least one second key performance indicator (KPI2) derived on a mathematical or statistical model, in particular a digital twin, of the equipment (20, 30) to detect behavioural changes of the equipment (20, 30),
wherein the model is derived from model space of normal observed equipment behaviour of the parameters of the equipment (20, 30), the parameters associated to the equipment (20, 30), parameters of reference equipment (20, 30) or the parameters associated to the reference equipment (20, 30), in particular during at least one processing cycle.

14. Computer program for monitoring equipment (20, 30) in a process or manufacturing plant (1), the program comprising code means for causing the system according to claim 12 to execute a method according to any one of the claims 1 to 11, when the program is run on a computer controlling the system of claim 12.
